**Europäisches Patentamt**

**European Patent Office**

**Office européen des brevets**

(11) Veröffentlichungsnummer: **0 148 484**
**B1**

(12) **EUROPÄISCHE PATENTSCHRIFT**

(45) Veröffentlichungstag der Patentschrift:
**27.04.88**

(21) Anmeldenummer: **84116045.0**

(22) Anmeldetag: **21.12.84**

(51) Int. Cl.⁴: **F 16 L 23/00, F 16 J 15/12**

(54) **Flachdichtung.**

(30) Priorität: **22.12.83 DE 3346490**

(43) Veröffentlichungstag der Anmeldung:
**17.07.85 Patentblatt 85/29**

(45) Bekanntmachung des Hinweises auf die Patenterteilung:
**27.04.88 Patentblatt 88/17**

(84) Benannte Vertragsstaaten:
**AT CH DE FR GB IT LI SE**

(56) Entgegenhaltungen:
**US-A-3 531 133**

(73) Patentinhaber: **KSA Dichtsysteme GmbH & Co. KG, Steinbeisstrasse 46, D-7143 Vaihingen an der Enz (DE)**

(72) Erfinder: **Abele, Berthold Wilhelm, Am Schalkstein 21, D-7121 Walheim/Neckar (DE)**

(74) Vertreter: **Jackisch, Walter, Dipl.- Ing., Menzelstrasse 40, D-7000 Stuttgart 1 (DE)**

LIBER, STOCKHOLM 1988

**Beschreibung**

Die Erfindung betrifft eine Flachdichtung nach dem Oberbegriff des Anspruches 1.

Bei dieser bekannten Flachdichtung (US-A-3 531 133) erstrecken sich die Erhöhungen des Dichtelementes nahezu über dessen gesamte Querschnittsbreite. Darum muß das Dichtelement verhältnismäßig stark zusammengepreßt werden, um in der Einbaulage die Erhöhungen ausreichend elastisch zu verformen. Infolge der symmetrischen Querschnittsausbildung des Dichtelementes und der großen Querschnittsbreite sind Bewegungen der beiden Trägerteile im wesentlichen nur senkrecht zur Trägerebene möglich, nicht jedoch in Richtung zueinander. Dadurch werden die Trägerteile jeweils dann stark beansprucht, wenn solche Bewegungen in Richtung zueinander in der Einbaulage erforderlich sind.

Der Erfindung liegt die Aufgabe zugrunde, die gattungsgemäße Flachdichtung so auszubilden, daß sich ihr Dichtelement ohne Beeinträchtigung der Dichtfunktion zur Erzielung der erforderlichen Anpreßkraft leicht derart elastisch verformen läßt, daß die beiden durch das Dichtelement miteinander verbundenen Trägerteile auch Bewegungen in Richtung zueinander ausführen können.

Diese Aufgabe wird bei der gattungsgemäßen Flachdichtung erfindungsgemäß mit den kennzeichnenden Merkmalen des Anspruches 1 gelöst.

Bei der erfindungsgemäßen Flachdichtung sind die beiden Seitenflächen der Erhöhungen unterschiedlich lang, so daß das Dichtelement asymmetrischen Querschnitt hat. Dadurch kann das Dichtelement im Anschlußbereich zum einen Trägerteil eine sehr geringe Dicke aufweisen. Dieser im Querschnitt stark verringerte Bereich des Dichtelemtes erlaubt in einfacher Weise Bewegungen der beiden Trägerteile auch in Richtung zueinander, so daß die erfindungsgemäße Flachdichtung auch dort eingesetzt werden kann, wo solche Querbewegungen innerhalb der Trägerebene auftreten können. Darüber hinaus können sich die beiden Trägerteile infolge des stark verjüngten Querschnittsbereiches des Dichtelementes auch schräg zur Trägerebene stellen. Gerade diese Relativbeweglichkeit der Trägerteile ist in der Praxis von großer Bedeutung, da es immer wieder vorkommt, daß die abzudichtenden Flächen, an denen die Flachdichtung anliegt, nicht genau parallel zueinander liegen. In diesem Fall ist mit der erfindungsgemäßen Flachdichtung eine einwandfreie Abdichtung gewährleistet, ohne daß das Dichtelement unzulässig stark verformt wird.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen

Fig. 1 eine Draufsicht auf eine erste Ausführungsform einer erfindungsgemäßen Flachdichtung,

Fig. 2 in vergrößerter Darstellung einen Teil eines Schnittes längs der Linie II-II in Fig. 1,

Fig. 3 und 4 in Darstellungen entsprechend den Fig. 1 und 2 eine zweite Ausführungsform einer erfindungsgemäßen Flachdichtung,

Fig. 5 und 6 in Darstellungen entsprechend den Fig. 1 und 2 eine dritte Ausführungsform einer erfindungsgemäßen Flachdichtung,

Fig. 7 und 8 in Darstellungen entsprechend den Fig. 1 und 2 eine vierte Ausführungsform einer erfindungsgemäßen Flachdichtung.

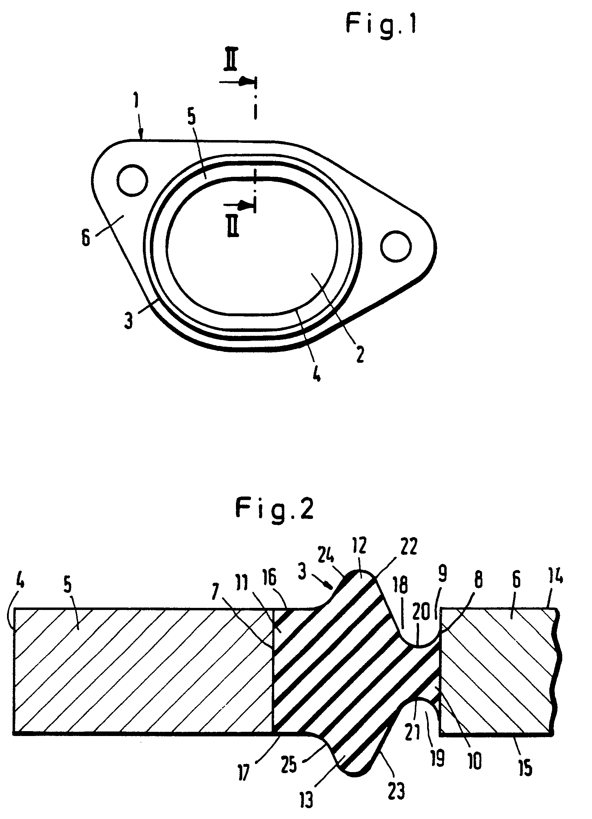

Die Flachdichtung gemäß den Fig. 1 und 2 hat einen Träger 1, in dem eine abzudichtende Ausnehmung 2 vorgesehen ist. Sie wird mittels eines Dichtelementes 3 abgedichtet, das parallel zum Rand 4 der Ausnehmung 2 verläuft. Das Dichtelement verbindet einen die Ausnehmung 2 enthaltenden Trägerabschnitt 5 mit dem übrigen Teil 6 des Trägers 1. Der Träger 1 besteht somit aus zwei voneinander getrennten Teilen, nämlich dem Trägerabschnitt 5 und dem Trägerteil 6, die durch das umlaufende Dichtelement 3 miteinander verbunden sind. Der Trägerabschnitt 5 wird durch einen Randabschnitt der Ausnehmung 2 gebildet und ist ringförmig ausgebildet.

Die beiden Trägerteile 5 und 6 können mechanisch mit dem Dichtelement 3 verbunden werden. Vorzugsweise wird das Dichtelement 3 jedoch chemisch mit dem Trägerabschnitt 5 und dem Trägerteil 6 fest verbunden. Die einander zugewandten ringförmig verlaufenden Seitenflächen 7 und 8 (Fig. 2) des Trägerabschnittes 5 und des Trägerteiles 6 begrenzen einen Ringspalt 9, der durch das Dichtelement 3 im wesentlichen ausgefüllt wird. Die Seitenflächen 7, 8 bilden außerdem Bindeflächen, an denen das Dichtelement 3 befestigt wird. Die Seitenflächen 7, 8 werden zur Befestigung des Dichtelementes 3 zunächst vorzugsweise aufgerauht. Anschließend wird ein chemischer Haftvermittler als Bindemittel aufgebracht und das Dichtelement 3 eingesetzt sowie mit diesen Seitenflächen verbunden. Anschließend wird diese Flachdichtung wärmebehandelt, vorzugsweise einer Vulkanisation unterworfen, so daß eine absolut feste Verbindung zwischen dem Dichtelement 3 und den Trägerteilen 5, 6 erreicht wird. Diese Verbindung ist so fest, daß die Flachdichtung den an sie gestellten Anforderungen einwandfrei gerecht wird.

Im Ausführungsbeispiel hat das Dichtelement 3 im Anschlußbereich zum Trägerabschnitt 5 gleiche Dicke wie dieser, so daß eine feste Verbindung zwischen dem Trägerabschnitt 5 und dem Dichtelement 3 gewährleistet ist. Im Anschlußbereich zum Trägerteil 6 ist das Dichtelement 3 jedoch wesentlich dünner als der Trägerteil 6. Wie Fig. 2 zeigt, ist dieser dünnere Rand 10 des Dichtelementes 3 nur etwa halb so dick wie der gegenüberliegende Rand 11 des Dichtelementes bzw. wie der Trägerteil 6.

Das Dichtelement 3 hat zwei ringförmige Dichtlippen 12 und 13, die über die Ober-und Unterseite 14 und 15 des Trägers 1 ragen. Die beiden Dichtlippen 12, 13 liegen auf gleicher Höhe und gehen jeweils stetig gekrümmt in die Ober-und Unterseite 16 und 17 des dickeren Randes 11 über. Die Oberseite 14 und die Unterseite 15 des Trägers 1 liegt jeweils in einer gemeinsamen Ebene mit der Oberseite 16 und der Unterseite 17 des Randes 11 des Dichtelementes 3. Zwischen den beiden Dichtlippen 12, 13 und dem Trägerteil 6 ist das Dichtelement jeweils mit einer Vertiefung 18 und 19 versehen, deren Boden 20 und 21 im Querschnitt teilkreisförmig gekrümmt ist und in eine konisch verlaufende Seitenwand 22 bzw. 23 der Dichtlippe 12 bzw. 13 übergeht. Die gegenüberliegende, ebenfalls konisch verlaufende Seitenwand 24 und 25 der Dichtlippen 12 und 13 geht stetig gekrümmt in die Seitenwände 22 und 23 sowie in die Ober-und Unterseite 16 und 17 des Dichtelementes 3 über. Der Boden 20, 22 der Vertiefungen 18, 19 geht außerdem in die Seitenfläche 8 des Trägerteiles 6 mit Abstand von der Ober-und Unterseite 14 und 15 des Trägers 1 über. hie Seitenwände 22 und 23 der Dichtlippen 12, 13 sind länger als die Seitenwände 24, 25, so daß der Boden 20, 21 der Vertiefungen 18, 19 innerhalb der Querschnittsdicke des Trägers 1 liegt.

In der Einbaulage der Flachdichtung werden die Dichtlippen 12, 13 zusammengedrückt. Das Material der Dichtlippen 12, 13 wird hierbei in die Vertiefungen 18, 19 verdrängt, so daß die Flachdichtung in der Einbaulage keine über die Ober-und Unterseite 14 und 15 vorstehenden Teile hat und das Dichtelement 3 nicht unzulässig stark verformt wird.

Da bei der Flachdichtung die beiden Trägerteile 5 und 6 ausschließlich durch das Dichtelement 3 miteinander verbunden sind, also zwischen diesen Teilen kein Trägersteg vorhanden ist, steht für die Ausbildung der Vertiefungen 18 und 19 ein entsprechend größerer Raum zur Verfügung. Dadurch kann die Flachdichtung mit dem Dichtelement 3 und dem Träger 1 genau an den jeweiligen Dichtungs-und Konstruktionsfall angepaßt werden. Die in den Fig. 1 und 2 dargestellte Flachdichtung wird als Dichtung bei einem Saugrohr verwendet.

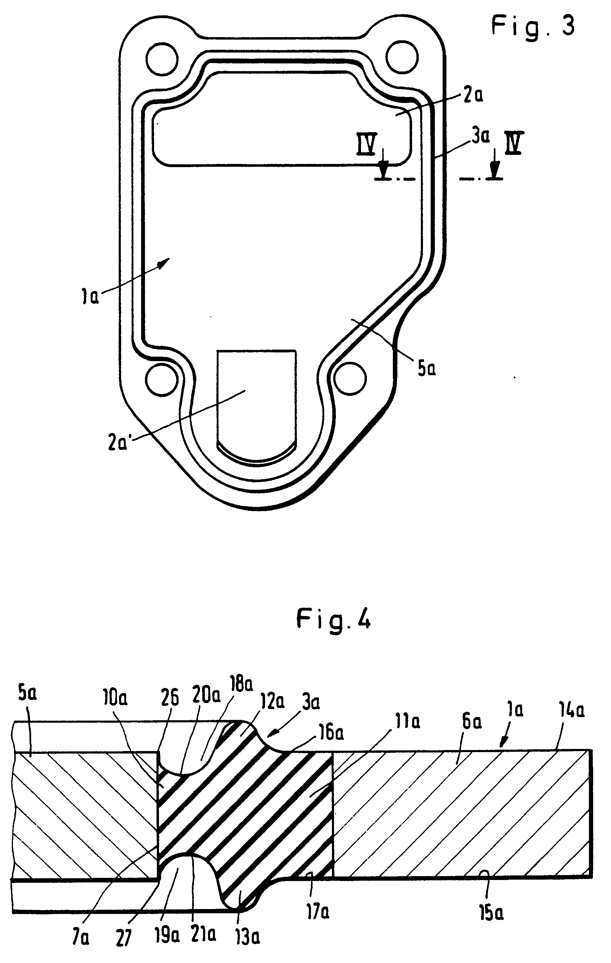

Die in den Fig. 3 und 4 dargestellte Flachdichtung wird für eine Kurbelgehäuseentlüftung eingesetzt. Sie hat ebenfalls einen Träger 1a, in dem zwei Ausnehmungen 2a, 2a' vorgesehen sind. Das Dichtelement 3a verläuft im Randbereich des Trägers 1a und ist als unregelmäßig geformter Ring ausgebildet. Auch bei dieser Ausführungsform ist der Träger 1a zweigeteilt und besteht aus dem die Ausnehmungen 2a, 2a' enthaltenden Trägerabschnitt 5a und dem übrigen Trägerteil 6a, der durch den Randbereich des Trägers 1a gebildet wird.

Das Dichtelement 3a ist im wesentlichen gleich ausgebildet wie das Dichtelement 3 der vorherigen Ausführungsform. Der dickere Rand 11a des Dichtelementes 3a ist jedoch mit dem Trägerteil 6a verbunden, dessen Ober-und Unterseite 16a, 17a jeweils in der gleichen Ebene wie die Ober-und Unterseite 14a, 15a des Trägers 1a liegt. Der gegenüberliegende Rand 10a des Dichtelementes 3a ist derart ausgebildet, daß er stetig gekrümmt bis zur oberen und unteren Kante 26 und 27 des Trägerabschnittes 5a verläuft, die jeweils zwischen der Oberseite 14a und der Unterseite 15a des Trägers 1a sowie der Seitenfläche 7a des Trägerabschnittes 5a gebildet wird. Entsprechend der vorherigen Ausführungsform ist das Dichtelement 3a im Bereich neben den beiden Dichtlippen 12a, 13a mit jeweils einer umlaufenden Vertiefung 18a, 19a versehen, die als Aufnahmeraum für das im Einbauzustand verdrängte Volumen der Dichtlippen 12a, 13a dient. Im Gegensatz zur vorigen Ausführungsform ist das Dichtelement 3a im Bereich des Randes 10a dicker gehalten, so daß der Boden 20a, 21a der Vertiefungen 18a, 19a geringeren Abstand von den die Ober-und Unterseite 14a, 15a des Trägers 1a enthaltenden Ebenen hat als die Ausführungsform gemäß den Fig. 1 und 2.

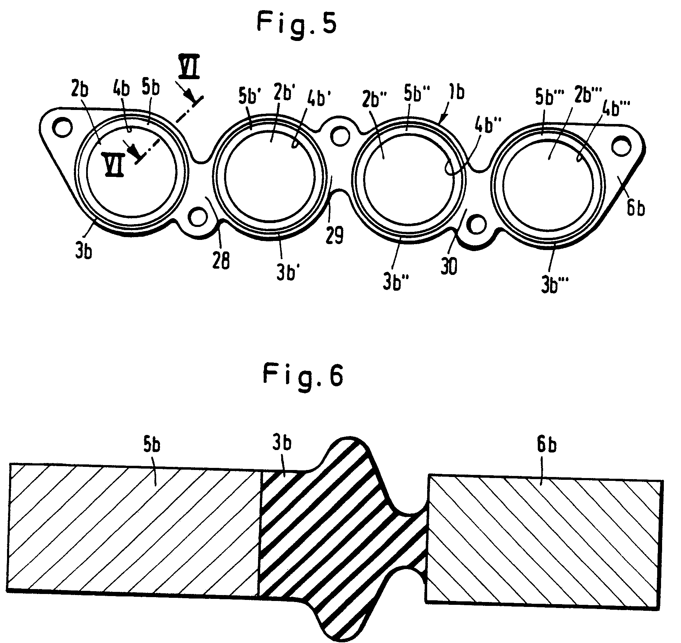

Die Flachdichtung gemäß den Fig. 5 und 6 wird bei einem Saugrohr eingesetzt und hat den Träger 1b, in dem vier Ausnehmungen 2b, 2b', 2b'', 2b''' nebeneinander vorgesehen und durch Stege 28, 29, 30 voneinander getrennt sind. Die Ausnehmungen sind kreisförmig ausgebildet und mit geringem Abstand von jeweils einem Dichtelement 3b, 3b', 3b'', 3b''' umgeben. Die Dichtelemente sind untereinander gleich ausgebildet. Bei dieser Ausführungsform ist der Träger 1b mehrteilig ausgebildet. Die die Ränder 4b, 4b', 4b'', 4b''' enthaltenden Trägerabschnitte 5b, 5b', 5b'', 5b''' sind jeweils durch das Dichtelement 3b, 3b', 3b'', 3b''' vom übrigen Trägerteil 6b getrennt. Somit werden vier ringförmige Trägerabschnitte 5b, 5b', 5b'', 5b''' und ein zusammenhängender Trägerteil 6b gebildet, die durch die vier Dichtelemente 3b, 3b', 3b'', 3b''' miteinander verbunden sind. Die Dichtelemente sind jeweils gleich ausgebildet und in bezug auf die Trägerteile 5b, 6b gleich angeordnet wie das Dichtelement 3 gemäß den Fig. 1 und 2.

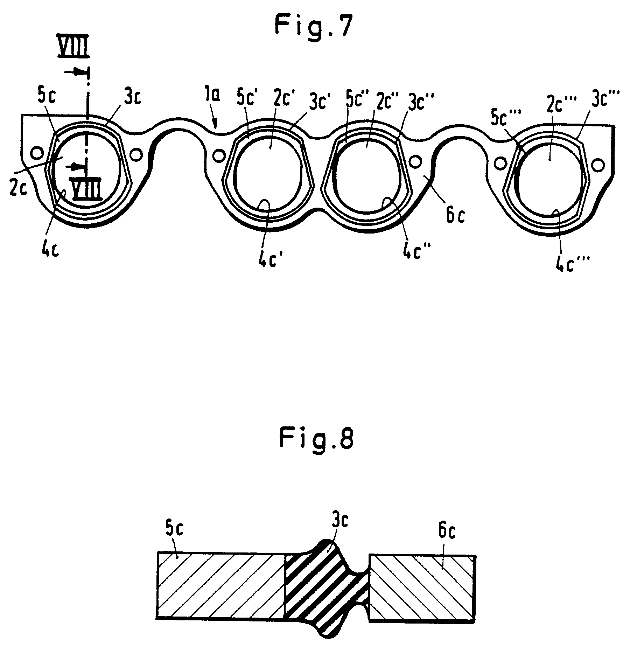

Die Fig. 7 und 8 zeigen eine Flachdichtung für ein Saugrohr. Sie hat einen Träger 1c, der vier abzudichtende Ausnehmungen 2c, 2c', 2c'', 2c''' aufweist, die jeweils elliptischen Umriß haben. Sie sind mit Abstand von jeweils einem ringförmigen Dichtelement 3c, 3c', 3c'', 3c''' umgeben. Bei dieser Ausführungsform hat das Dichtelement über seinen Umfang unterschiedlichen Abstand vom Rand 4c, 4c', 4c'', 4c''' der Ausnehmungen 2c, 2c', 2c'', 2c'''. Die Dichtelemente trennen jeweils die die Ränder 4c, 4c', 4c'', 4c''' enthaltenden Trägerabschnitte 5c, 5c', 5c'', 5c''' vom übrigen Trägerteil 6c. Die Trägerabschnitte 5c, 5c', 5c'', 5c''' sind jeweils ringförmig ausgebildet und durch die Dichtelemente mit dem zusammenhängenden Trägerteil 6c verbunden. Die Dichtelemente sind untereinander gleich ausgebildet und in gleicher Weise konstruktiv gestaltet und am Träger 1c angeordnet wie bei der Ausführungsform gemäß den Fig. 1 und 2.

Bei sämtlichen Ausführungsformen besteht der Träger 1, 1a, 1b, 1c üblicherweise aus Eisenmetallen. Je nach Einsatzgebiet kann der Träger aber auch aus Nichteisenmetallen, aus Kunststoffen, nämlich Thermo- und Duroplaste, oder aus armierten oder gefüllten Phenolharzen bestehen. Die Dichtelemente können aus Elastomeren, wie Gummi, aus thermoplastischen Elastomeren, aus Kunststoffen, aus Weichmetallen und dergleichen bestehen. Auch hier richtet sich das Material des Dichtelementes nach dem gewünschten Einsatzgebiet und der erforderlichen Dichtfunktion. Die unterschiedlichen Trägerteile können untereinander ebenfalls aus unterschiedlichen Materialien bestehen, so daß die Flachdichtung optimal auf den jeweiligen Dicht-und/oder Konstruktionsfall eingestellt werden kann. Das Dichtelement selbst kann symmetrisch ausgebildet sein, wie in den Ausführungsbeispielen dargestellt, aber auch asymmetrisch ausgebildet werden. So kann das Dichtelement hinsichtlich seiner Formgestaltung und Formgebung der Dichtlippen auf der Oberseite des Trägers anders ausgebildet werden als an der Trägerunterseite. Ebenso können die Vertiefungen an der Ober-und Unterseite des Trägers unterschiedlich ausgebildet werden. Die einander gegenüberliegenden Seitenflächen der Trägerteile, die den Ringspalt für das Dichtelement begrenzen, können je nach Dichtungs- und/oder Konstruktionsfall verschiedenartig ausgebildet sein. So können sie beispielsweise abgesetzt sein, einen völlig unregelmäßigen Umriß aufweisen, zahnartig ausgebildet sein oder eine andere Profilgebung haben. Insbesondere kann das Dichtelement in jeder beliebigen geometrischen Konfiguration gestaltet werden, je nach den erwünschten technischen Anforderungen. Wenn das Dichtelement aus elastischem Werkstoff besteht, dann können sich die beiden durch das Dichtelement miteinander verbundenen Trägerteile relativ zueinander bewegen. Eine solche begrenzte Beweglichkeit ist bei thermischen Beanspruchungen der abzudichtenden Teile oder bei dynamischen Bewegungen, beispielsweise bei Druckschwankungen der abzudichtenden Teile, von großem Vorteil. Infolge dieser Beweglichkeit kann sich die Flachdichtung spannungsfrei an die jeweiligen Dichtbedingungen anpassen. Auch Temperaturschwankungen können durch die Relativbeweglichkeit ausgeglichen werden. Diese Relativbeweglichkeit ist in allen Richtungen gegeben, also nicht nur quer zur Ober-bzw. Unterseite des Trägers, sondern auch parallel zur Trägerebene. Auch ist eine Relativbewegung in einer Neigungsebene möglich. Somit kann sich die Flachdichtung optimal an die jeweils herrschenden Einbau- und Dichtverhältnisse anpassen.

Bei den beschriebenen Flachdichtungen wird das Dichtelement nicht mehr in eine Nut des Trägers eingelegt, sondern das Dichtelement bildet einen Verbindungsabschnitt zwischen zwei voneinander völlig getrennten Trägerteilen. Das Dichtelement wird mit den Trägerteilen mechanisch oder auch chemisch fest verbunden. Da keine Nut für das Dichtelement erforderlich ist, sind keine Mindestdicken des Trägers mehr zu berücksichtigen, da das Dichtelement auch noch an sehr dünnen Trägerteilen bzw. Trägerabschnitten sicher befestigt werden kann. Die Flachdichtung kann darum für alle nur denkbaren Konstruktionsfälle gestaltet und hergestellt werden. Thermische Beanspruchungen der abzudichtenden Teile oder dynamische Bewegungen, beispielsweise Druckschwankungen der abzudichtenden Teile, können einwandfrei ausgeglichen werden, indem sich die gesamte Flachdichtung an die jeweiligen Dichtbedingungen anpaßt. Auch bei Temperaturschwankungen ist diese Beweglichkeit der Trägerteile gegeneinander, die in allen Richtungen gegeben ist, von großem Vorteil. Somit ist bei den beschriebenen Flachdichtungen die Möglichkeit gegeben, sie in konstruktiv einfacher Weise den baulichen Gegebenheiten anzupassen, beispielsweise auch in Fällen, in denen das Dichtelement selbst außerordentlich eng an den Rand der Ausnehmung des Trägerabschnittes gelegt werden muß.

## Patentansprüche

1. Flachdichtung mit einem Träger, in dem mindestens eine Ausnehmung (2; 2a, 2a'; 2b, 2b', 2b'', 2b'''; 2c, 2c', 2c'', 2c''') vorgesehen ist, die in eine Trägerabschnitt (5; 5a; 5b, 5b', 5b'', 5b'''; 5c, 5c', 5c'', 5c''') angeordnet ist, der mit einem übrigen Teil (6; 6a; 6b; 6c) des Trägers durch mindestens ein Dichtelement (3; 3a; 3b, 3b', 3b'', 3b'''; 3c, 3c', 3c'', 3c''') verbunden ist, das mit jeweils einer Erhöhung (12, 13; 12a, 13a) über beide Seiten des Trägers ragt, über jeweils einen Anschlußbereich fest mit dem Trägerabschnitt und dem übrigen Teil des Trägers verbunden ist und zur Bildung von Verdrängungsräumen (18, 19; 18a, 19a) für das in Einbaulage verdrängte Material der Erhöhungen in einem Bereich (10; 10a) kleinere Dicke als einer der beiden Trägerteile aufweist,
dadurch gekennzeichnet, daß das Dichtelement (3; 3a; 3b, 3b', 3b' ', 3b'''; 3c, 3c', 3c'', 3c''') beiderseits der Erhöhungen unterschiedliche Dicke hat, derart, daß die den Verdrängungsräumen (18, 19; 18a, 19a) zugewandte Seitenfläche (22, 23) der Erhöhungen (12, 13; 12a, 13a) länger ist als die gegenüberliegende Seitenfläche (24, 25), die stetig gekrümmt in die Ober- und Unterseite (16, 17; 16a, 17a) des dickeren Anschlußbereiches (11, 11a) übergeht.

2. Flachdichtung nach Anspruch 1, dadurch gekennzeichnet, daß der Trägerabschnitt (5; 5a; 5b, 5b', 5b'', 5b'''; 5c, 5c', 5c'', 5c''') aus einem anderen Material besteht als der übrige Trägerteil (6, 6a; 6b; 6c).

3. Flachdichtung nach Anspruch 1 oder 2, dadurch gekennzeichnet, daß das Dichtelement (3; 3b; 3b', 3b'', 3b'''; 3c, 3c', 3c'', 3c''') an dem den Verdrängungsraum (18, 19) aufweisenden Anschlußbereich (10) nur über einen Teil der Dicke des entsprechenden Trägerteiles (6; 6b; 6c) mit ihm verbunden ist.

4. Flachdichtung nach einem der Ansprüche 1 bis 3, dadurch gekennzeichnet, daß das Dichtelement (3; 3a; 3b; 3b', 3b'', 3b'''; 3c, 3c', 3c'', 3c''') in seinem dickeren Anschlußbereich (11; 11a) mit seiner Ober- und Unterseite (16, 17; 16a, 17a) jeweils in einer Ebene mit der Ober- und Unterseite (14, 15; 14a, 15a) des Trägers (1; 1a; 1b; 1c) liegt.

5. Flachdichtung nach einem der Ansprüche 1 bis 4, dadurch gekennzeichnet, daß die Ober- und Unterseite (16, 17; 16a, 17a) des dickeren Anschlußbereiches (11; 11a) parallel zueinander verlaufen.

## Claims

1. A flat gasket with a bearer, in which at least one cut-out (2; 2a, 2a'; 2b, 2b', 2b'', 2b'''; 2c, 2c', 2c'', 2c''') is provided, which is arranged in a bearer section (5; 5a; 5b, 5b', 5b'', 5b'''; 5c, 5c', 5c'', 5c'''), which is connected to a remaining part (6; 6a; 6b; 6c) of the bearer by means of at least one sealing element (3; 3a; 3b, 3b', 3b'', 3b'''; 3c, 3c', 3c'', 3c'''), which in each case has a raised part (12, 13; 12a, 13a) which projects above both sides of the bearer, is connected rigidly by a connection area both to the bearer section and to the remaining part of the bearer and has a smaller thickness than one of the two bearer parts in an area (10; 10a) so as to form the displacement spaces (18, 19; 18a, 19a) for the material of the raised parts displaced in the installed position, characterised in that the sealing element (3; 3a; 3b, 3b', 3b'', 3b'''; 3c, 3c', 3c'', 3c''') has a different thickness on the two sides of the raised sections, such that the side face (22, 23) of the raised parts (12, 13; 12a, 13a) facing the displacement spaces (18, 19; 18a, 19a) is longer than the opposite side face (24, 25), which changes in a continuous curve into the upper and lower sides (16, 17; 16a, 17a) of the thicker connection area (11, 11a).

2. A flat gasket according to claim 1, characterised in that the bearer (5; 5a; 5b, 5b', 5b'', 5b'''; 5c, 5c', 5c''') is made of a different material from the remaining bearer part (6, 6a; 6b; 6c).

3. A flat gasket according to claim 1 or 2, characterised in that the sealing element (3; 3b; 3b', 3b'', 3b'''; 3c, 3c', 3c'', 3c''') in the connection area (10) exhibiting the displacement space (18, 19) is connected to the corresponding bearer part (6; 6b; 6c) only over a part of its thickness.

4. A flat gasket according to any one of the claims 1 to 3, characterised in that the sealing element (3; 3a; 3b; 3b', 3b'', 3b'''; 3c; 3c', 3c'', 3c''') in its thicker connection area (11, 11a) has its upper and lower side (16, 17; 16a, 17a) lying in a plane, respectively, with the upper and lower side (14, 15; 14a, 15a) of the bearer (1; 1a; 1b; 1c).

5. A flat gasket according to any one of the claims 1 to 4, characterised in that the upper and lower side (16, 17; 16a, 17a) of the thicker connection area (11; 11a) run parallel to one another.

## Revendications

1. Garniture d'étanchéité plate comportant un support dans lequel est prévu au moins un évidement (2; 2a, 2a'; 2b, 2b', 2b'', 2b'''; 2c, 2c', 2c'', 2c''') qui est disposé dans une portion de support (5; 5a; 5b, 5b', 5b'', 5b'''; 5c, 5c', 5c'', 5c'''), laquelle est reliée avec une partie restante (6; 6a; 6b; 6c) du support par au moins un élément d'étanchéité (3; 3a; 3b, 3b', 3b'', 3b'''; 3c, 3c', 3c'', 3c''') qui dépasse chaque fois par un relief (12, 13; 12a, 13a) au-dessus des deux côtés du support, qui est chaque fois rendu solidaire par une zone de raccordement de la portion de support et de la partie restante du support, et qui, pour former des volumes de refoulement (18, 19; 18a, 19a) pour le matériau des reliefs refoulé en position montée, présente dans une zone (10, 10a) une épaisseur plus faible que l'une des deux parties de support, caractérisée en ce que l'élément d'étanchéité (3; 3a; 3b, 3b', 3b'', 3b'''; 3c, 3c', 3c'', 3c''') a de chaque côté des reliefs une épaisseur différente, de sorte que la surface latérale (22, 23) des reliefs (12, 13; 12a, 13a) tournée vers les volumes de refoulement (18, 19; 18a, 19a) est plus longue que la surface latérale opposée (24, 25) qui se raccorde, en étant constamment incurvée, au côté supérieur et au côté inférieur (16, 17; 16a, 17a) de la zone de raccordement plus épaisse (11, 11a).

2. Garniture d'étanchéité plate selon la revendication 1, caractérisée en ce que la portion de support (5; 5a; 5b, 5b', 5b'', 5b'''; 5c, 5c', 5c'', 5c''') est constituée par un autre matériau que la partie restante (6; 6a; 6b; 6c) du support.

3. Garniture d'étanchéité plate selon la revendication 1 ou 2, caractérisée en ce que l'élément d'étanchéité (3; 3b, 3b', 3b'', 3b'''; 3c, 3c', 3c'', 3c'''), sur la zone de raccordement (10) comportant le volume de refoulement (18, 19) n'est relié à la partie de support correspondant (6; 6b; 6c) que sur une partie de l'épaisseur de celle-ci.

4. Garniture d'étanchéité plate selon l'une des revendications 1 à 3, caractérisée en ce que l'élément d'étanchéité (3; 3a; 3b, 3b', 3b'', 3b'''; 3c, 3c', 3c'', 3c''') dans sa zone de raccordement plus épaisse (11; 11a) a son côté supérieur et son côté inférieur (16, 17; 16a, 17a) respectivement dans le même plan que le côté supérieur et le côté inférieur (14, 15; 14a, 15a) du support (1; 1a; 1b; 1c).

5. Garniture d'étanchéité plate selon l'une des revendications 1 à 4, caractérisée en ce que le côté supérieur et le côté inférieur (16, 17; 16a, 17a) de la zone de raccordement plus épaisse (11; 11a) sont parallèles entre eux.

# Fig.1

# Fig.2

Fig. 3

Fig. 4

# Fig.5

# Fig.6

# Fig.7

# Fig.8